# EUROPEAN PATENT APPLICATION

(11) **EP 1 507 413 A2**
(43) Date of publication of application: **16.02.2005**
(21) Application number: 04013372.0
(22) Date of filing: 07.06.2004
(51) Int. Cl.: H04N 7/14

(54) **Method for photographing with a mobile terminal having a camera**

(30) Priority: 05.06.2003 KR 2003036496
(71) Applicant: Samsung Electronics Co., Ltd., Suwon-si, Gyeonggi-do (KR)
(72) Inventor: Kim, Yun-Hyang Samsung Electronics Co., Ltd., Suwon-si Gyeonggi-do (KR); Roh, Ho-Hyun Samsung Electronics Co., Ltd., Suwon-si Gyeonggi-do (KR)
(74) Representative: Lang, Johannes, Dipl.-Ing.

(57) **Abstract**

A photographing method for directing subjects being photographed to concentrate their attention on a camera within an apparatus at user selectable time increments. The photographing method comprises the steps of receiving a photographing key signal for photographing an image, reproducing a self-timer sound or a visual indicator to announce a time leading up to a moment of photographing after receiving the photographing key signal, reproducing a preparation sound and/or a visual indicator (or both), to announce a time just before the moment of photographing after the self-timer sound has been reproduced, reproducing a shutter sound to announce execution of photographing at the moment of photographing after the preparation sound has been reproduced, and photographing an image simultaneously with the reproduction of the shutter sound.

## Description

### BACKGROUND OF THE INVENTION

### Field of the Invention:

The present invention relates to an apparatus having a camera. More particularly, the present invention relates to a method for taking a photograph with a mobile terminal having a camera, which causes subjects being photographed to concentrate their attention at the moment of actual photographing.

### Description of the Related Art:

Mobile terminals have been developed to have a number of functions in addition to a basic communication function. Particularly, an additional element, such as a camera mounted in a mobile terminal enables the mobile terminal to have many additional functions in relation to video. However, when a user takes a photograph using the camera, persons being photographed can only recognize the moment of actual photographing according to a voice or an action of the user and only then concentrate their attention to the camera.

Accordingly, a need exists for a method for causing subjects being photographed to concentrate attention on the camera at the moment of actual photographing by using photographing effects of an apparatus which includes a camera element.

### SUMMARY OF THE INVENTION

Accordingly, the embodiments of the present invention have been made to solve the above-mentioned problems occurring in the prior art, and an object of the present invention is to provide a method for causing subjects being photographed to concentrate their attention on a camera by stimulating the subjects' sense of hearing and/or sense of sight at or near the moment of actual photographing.

To accomplish these and other objects in accordance with an embodiment of the present invention, a photographing method is provided including a mobile terminal having a camera. The photographing method can comprise the steps of receiving a photographing key signal for photographing an image; reproducing a self-timer sound to announce a time leading up to a moment of photographing after receiving the photographing key signal; reproducing a preparation sound to announce a time just before the moment of photographing after the self-timer sound has been reproduced; reproducing a shutter sound to announce execution of photographing at the moment of photographing after the preparation sound has been reproduced; and photographing an image simultaneously with the reproduction of the shutter sound.

In accordance with another embodiment of the present invention, a photographing method is provided and comprises the steps of receiving a photographing key signal for photographing an image; reproducing a preparation sound to announce a time just before the moment of photographing after receiving the photographing key signal; reproducing a shutter sound to announce execution of photographing at the moment of photographing after the preparation sound has been reproduced; and photographing an image simultaneously with the reproduction of the shutter sound.

In accordance with still another embodiment of the present invention, a photographing method is provided including a mobile terminal which has a key input unit for generating a photographing key signal to photograph an image, and a camera for photographing the image. The photographing method comprises the steps of setting at least one photographing effect for causing subjects being photographed to concentrate their attention on the camera; and displaying the photographing effect, which was set according to the setting step, when receiving the photographing key signal.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing an internal construction arrangement of an example mobile terminal having a camera according to an embodiment of the present invention;
FIG. 2 is a flowchart of an example method of setting a number of photographing effects in a mobile terminal having a camera according to an embodiment of the present invention;
FIGS. 3A to 3F are views showing information illustration examples displayed on the display unit shown in FIG. 1 according to an embodiment of the present invention; and
FIG. 4 is a flowchart of an example control method for providing photographing effects in a mobile terminal having a camera according to an embodiment of the present invention.

### DETAILED DESCRIPTION OF THE EXEMPLARY EMBODIMENT

Hereinafter, a method for taking a photograph with a mobile terminal having a camera will be described with reference to the accompanying drawings in accordance with an exemplary embodiment of the present invention. In the following description of the embodiment of the present invention, a detailed description of known functions and configurations incorporated herein will be omitted when it may make the subject matter unclear. Photographing effects, which are mentioned in the description of the embodiment of the present invention, are defined as a visual effect and/or an auditory effect for causing subjects being photographed to concentrate their attention on the camera before taking a photograph. In addition, while a mobile terminal having a camera is described as one embodiment of the present invention, the embodiments of the present invention described below can also be employed with any number of apparatuses having a camera.

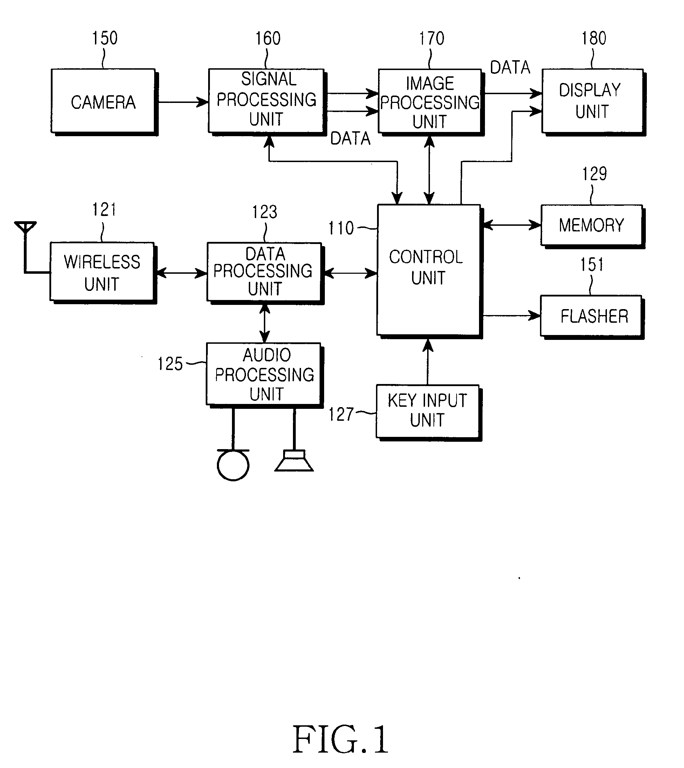

FIG. 1 is a block diagram showing an internal construction arrangement of an example mobile terminal having a camera according to an embodiment of the present invention. In FIG. 1, the example mobile terminal is shown including a wireless unit 121, a data processing unit 123, an audio processing unit 125, a key input unit 127, a memory 129, a flasher 151, a camera 150, a signal processing unit 160, an image processing unit 170, a display unit 180 and a control unit 110.

Referring to FIG. 1, a wireless unit 121 performs a communication function of the mobile terminal. The wireless unit 121 includes a wireless transmitter for up-converting and amplifying a frequency of a signal to be transmitted, and a wireless receiver for low-noise amplifying a received signal and down-converting a frequency of the received signal. A data processing unit 123 is coupled to the wireless unit 121 and includes a transmitter for encoding and modulating a signal to be transmitted, and a receiver for demodulating and decoding a received signal. The data processing unit 123 can include a MODEM (modulator and demodulator) and a CODEC (coder and decoder). An audio processing unit 125 can reproduce a received audio signal output from the data processing unit 123, and transfer an audio signal, which is generated from a microphone, to the data processing unit 123 for transmission.

A key input unit 127 includes input keys for inputting numeral and character information, and function keys for setting various functions. The function keys can include a photographing effect setting mode key, an effect setting mode key and a timer setting mode key. The function keys, which are keys for providing a user control for conversion into each mode, or for setting each mode, can include a navigation key, a numeral key, a character key, and any combinations thereof in order to serve as the function keys.

A memory 129 is coupled to the control unit 110 and can include a program memory section and a data memory section. The program memory section can store programs for controlling the normal operation of the mobile terminal. The data memory section can be used to temporarily store data generated in the course of executing the programs, and store data input from an exterior input device. In addition, the data memory section can be used to store preset photographing effects.

A flasher 151 is also coupled to the control unit 110, and can include visual indicators, such as multi-step LEDs (light-emitting diodes). The multi-step LEDs can emit lights of several colors. A camera 150 is coupled to a signal processing unit 160 and can include a camera sensor for converting an optical signal into an electric signal, in which the optical signal is obtained through photographing an image. In this example embodiment, the camera sensor is a charge-coupled device (CCD) sensor, however, the embodiments of the present invention can include any suitable camera sensor.

A signal processing unit 160 converts a video signal, which is input from the camera 150, into an image signal. In this example embodiment, the signal processing unit 160 is a digital signal processor (DSP), however, the embodiments of the present invention can include any suitable image signal processor. An image processing unit 170 receives the image signal output from the signal processing unit 160 and generates screen data for displaying an image on a screen corresponding to the image signal. The image processing unit 170 transmits the image signal received under the control of a control unit 110 according to the standard of a display unit 180, and compresses and decompresses the image data.

The control unit 110 can include the data processing unit 123, and functions to control the general operation of the mobile terminal. In addition, the control unit 110 can receive key signals of the key input unit 127 and control internal components of the mobile terminal. The display unit 180 can employ an LCD or any similar device. The display unit 180 can display an image signal received from the image processing unit 170 on a screen and can further display data stored in the memory 129 on the screen as directed.

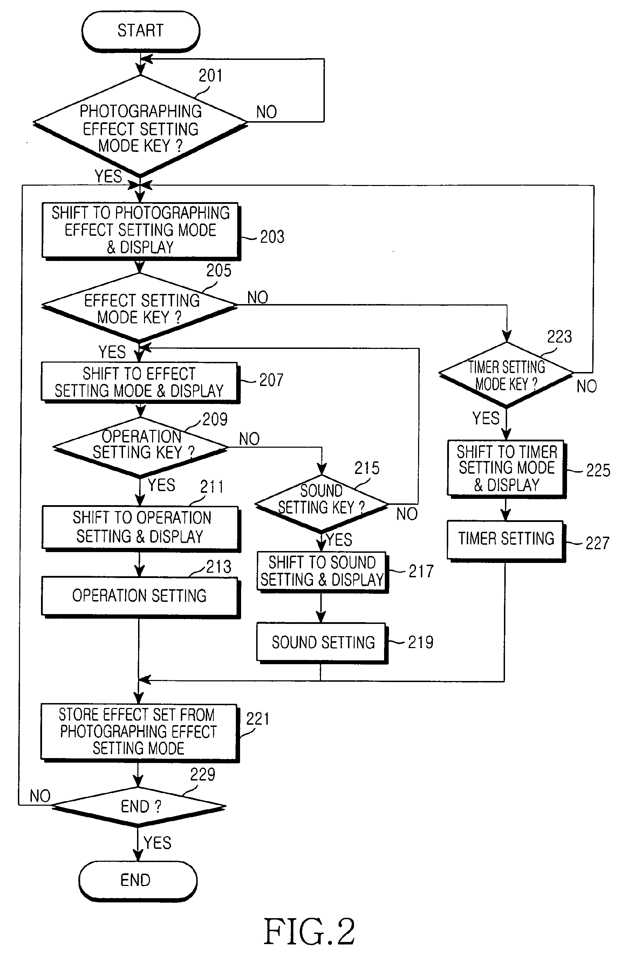

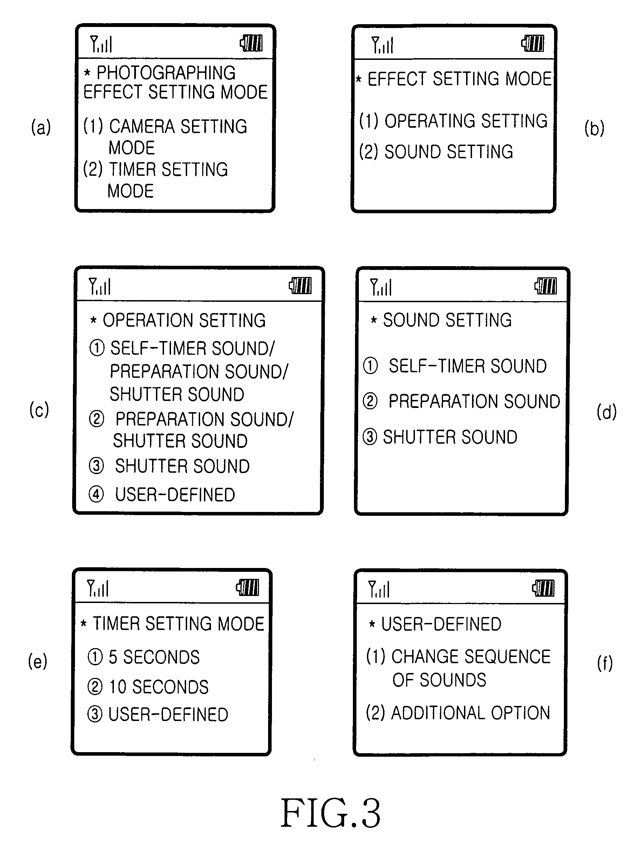

FIG. 2 is a flowchart of an example method of setting any number of photographing effects in a mobile terminal having a camera according to an embodiment of the present invention. FIGS. 3A to 3F are views showing information illustration examples displayed on the display unit shown in FIG. 1. Hereinafter, a method for setting photographing effects to concentrate the attention of persons to be photographed will be described with reference to FIGS. 1, 2 and 3.

In step 201 of FIG. 2, the control unit 110 first checks whether or not a key signal is input from the key input unit 127. As a result, the control unit 110 maintains an initial state when the input key signal is not a photographing effect setting mode key signal. However, when the input key signal is the photographing effect setting mode key signal, the control unit 110 proceeds to step 203. The photographing effect setting mode key signal is generated when a user pushes the photographing effect setting mode key of the key input unit 127. That is, the photographing effect setting mode key is a key for entering the photographing effect setting mode.

In step 203, the control unit 110 directs a transition, or shift, into the photographing effect setting mode and controls the display unit 180 to display the photographing effect setting mode, and then proceeds to step 205. In step 203, the photographing effect setting mode can be displayed in the display unit 180 as shown in FIG. 3A. The photographing effect setting mode is a mode for directing persons to be photographed to concentrate their attention on the camera. A mobile terminal user sets such an effect for stimulating the subjects' sense of hearing or sense of sight.

In step 205, the control unit 110 checks whether or not a key signal is input from the key input unit 127. As a result, when the input key signal is not an effect setting key signal, the control unit 110 proceeds to step 223. When the input key signal is the effect setting key signal, the control unit 110 proceeds to step 207. The effect setting key signal is generated when the user pushes an effect setting key of the key input unit 127. Specifically, the effect setting key is used for making a shift into a condition in which an effect can be set.

In step 207, the control unit 110 directs a shift into an effect setting mode and controls the display unit 180 to display the effect setting mode, and then proceeds to step 209. In step 207, the effect setting mode can be displayed in the display unit 180 as shown in FIG. 3B. The effect setting mode is a mode for setting an effect for stimulating the sense of hearing or sense of sight of persons to be photographed.

In step 209, the control unit 110 checks whether or not a key signal is input from the key input unit 127. As a result, when the input key signal is not an operation setting key signal, the control unit 110 proceeds to step 215. When the input key signal is the operation setting key signal, the control unit 110 proceeds to step 211.

In step 211, the control unit 110 directs a shift into an operation setting mode and controls the display unit 180 to display the operation setting mode, and then proceeds to step 213. In step 211, the operation setting mode can be displayed in the display unit 180 as shown in FIG. 3C.

In step 213, the control unit 110 performs an operation setting process, and then proceeds to step 221. The operation setting mode can include four operation states as shown in FIG. 3C. Three operation states may be set by a combination of a self-timer sound, a preparation sound and a shutter sound. The self-timer sound is generated for a period up to a time just before the moment of photographing, the preparation sound is generated at a time just before the moment of photographing, and the shutter sound is generated at the moment of photographing.

For example, when the user sets the operation setting mode as "self-timer sound/preparation sound/shutter sound" shown in FIG. 3C, the control unit 110 controls the audio processing unit 125 to generate the self-timer sound, the preparation sound, and the shutter sound in sequence when the user takes a photograph. When the user sets the operation setting mode as "preparation sound/shutter sound" shown in FIG. 3C, the control unit 110 controls the audio processing unit 125 to generate the preparation sound and the shutter sound in sequence when the user takes a photograph. When the user sets the operation setting mode as "shutter sound" shown in FIG. 3C, the control unit 110 controls the audio processing unit 125 to generate only the shutter sound when the user takes a photograph.

The self-timer sound may be used when it has been set in a timer setting mode. When the user does not set a value in the timer setting mode, the timer setting mode is automatically set as a basic value, such as five seconds for example.

A remaining operation state, that is, "user-defined" provides an operation condition defined by a user as shown in FIG. 3F. The user can set an operation condition as desired, to be implemented in the user-defined operation setting. For example, the user-defined mode may include a sound sequence changing mode and an additional option mode. The sound sequence changing mode can be used for changing the sequence of the self-timer sound, the preparation sound and the shutter sound. Such additional options can include an operation of a flasher 151 in addition to the self-timer sound, the preparation sound and the shutter sound. For example, where the timer setting mode is set at five seconds, the flasher 151 may emit light for 5 seconds according to a user's setting when the user takes a photograph. Specifically, when the user sets blue, red, yellow, purple and white as flasher color sequences in the user-defined mode, the control unit 110 can control the flasher 151 to emit a blue light five seconds before photographing, a red light four seconds before photographing, a yellow light three seconds before photographing, a purple light two seconds before photographing and a white light one second before the moment of photographing, according to the operation of the timer. In addition, the user may set the flasher 151 to be operated simultaneously with the generation of at least one sound from among the self-timer sound, the preparation sound and the shutter sound.

Returning to FIG. 2, in step 215, the control unit 110 checks whether or not a key signal is input from the key input unit 127. As a result, when the input key signal is not a sound setting key signal, the control unit 110 returns to step 207. When the input key signal is the sound setting key signal, the control unit 110 proceeds to step 217. In step 217, the control unit 110 directs a shift into a sound setting mode and controls the display unit 180 to display the sound setting mode, and then proceeds to step 219. In step 217, the sound setting mode may be displayed in the display unit 180 as shown in FIG. 3D.

In step 219, the control unit 110 performs a sound setting process and then proceeds to step 221. The sound setting mode can include the self-timer sound, the preparation sound and the shutter sound, as shown in FIG. 3D. The self-timer sound can be provided for announcing leading times for a predetermined time up to the moment of photographing, and may be either a voice countdown or a specific sound. In an example including a voice countdown, when it is determined that the predetermined pre-photograph period of time is five seconds, a vocal sound "five" may be output through a speaker five seconds before the moment of photographing. In a similar fashion, a vocal sound "four", "three", "two", and "one" can be provided at the corresponding times before the moment of photographing, respectively.

In an example including a specific sound, when it is determined that the predetermined pre-photograph period of time is three seconds, the specific sound, such as "ding-dong", may be output through the speaker at each or any time including three seconds, two seconds, and one second before the moment of photographing. The preparation sound can be provided for announcing a point in time just before the moment of photographing, and can include vocal sounds such as "smile", "cheese", "kimchi", or "look at me." The shutter sound can be provided for announcing the moment of photographing, and may be output as a vocal sound, such as "click", "O.K.", and "good", through the speaker. For the above-mentioned sound settings, directly recorded voices can be used. These are presented as examples only and it will be understood that any suitable sound can be used as the preparation sound, shutter sound and self-timer sound.

In step 223, the control unit 110 checks whether or not a key signal is input from the key input unit 127. As a result, when the input key signal is not a timer setting mode key signal, the control unit 110 returns to step 203. When the input key signal is the timer setting mode key signal, the control unit 110 proceeds to step 225. In step 225, the control unit 110 directs a shift into a timer setting mode and controls the display unit 180 to display the timer setting mode, and then proceeds to step 227. In step 225, the timer setting mode may be displayed as shown in FIG. 3E.

In step 227, the control unit 110 performs a timer setting process and then proceeds to step 221. As shown in FIG. 3E, the user may select a time value, such as five seconds or ten seconds in the timer setting mode, and also may set a user-defined period of time (for example, three seconds, twenty seconds, etc.) as he pleases. In step 221, the control unit 110 controls the memory 129 to store the effects set in the photographing effect setting mode, and then proceeds to step 229. In step 229, the control unit 110 checks whether or not the photographing effect setting mode is completed. As a result, when the photographing effect setting mode is not completed, the control unit 110 returns to step 203, so as to repeat the above-described processes until the photographing effect setting mode is completed. However, when the photographing effect setting mode is completed at step 229, the control unit 110 ends the operation of the photographing effect setting mode.

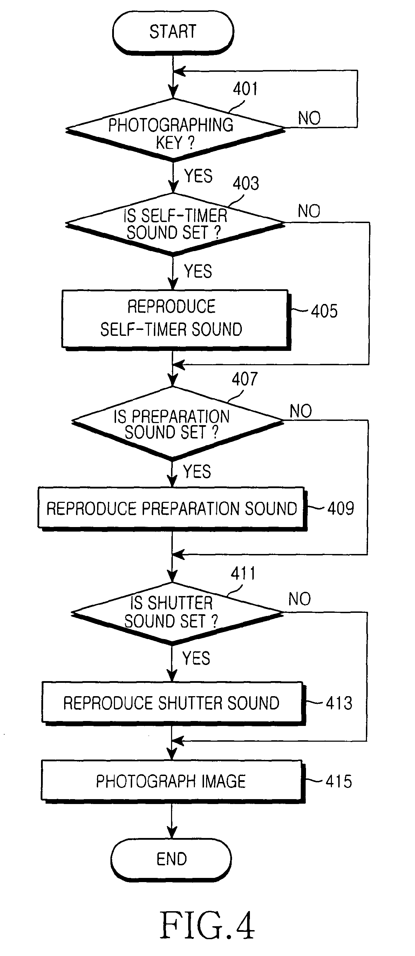

FIG. 4 is a flowchart of an example control method for providing photographing effects in the mobile terminal having a camera according to an embodiment of the present invention. Hereinafter, a result obtained by the effects set in the photographing effect setting mode will be described with reference to FIGS. 1 and 4.

In step 401, the control unit 110 checks whether or not a key signal is input from the key input unit 127. As a result, when the input key signal is not a photographing key signal, the control unit 110 maintains an initial state. When the input key signal is the photographing key signal, the control unit 110 proceeds to step 403. In step 403, the control unit 110 checks whether or not a self-timer sound is set. As a result, when the self-timer sound is not set, the control unit 110 proceeds to step 407. When the self-timer sound is set, the control unit 110 proceeds to step 405. In step 405, the control unit 110 controls the audio processing unit 125 to reproduce the self-timer sound, and then proceeds to step 407. However, when the self-timer sound is not set, the control unit 110 does not perform a control operation for reproducing the self-timer sound.

In step 407, the control unit 110 checks whether or not a preparation sound is set. As a result, when the preparation sound is not set, the control unit 110 does not perform a control operation for reproducing the preparation sound and proceeds to step 411. However, when the preparation sound is set, the control unit 110 proceeds to step 409. In step 409, the control unit 110 controls the audio processing unit 125 to reproduce the preparation sound, and then proceeds to step 411.

In step 411, the control unit 110 checks whether or not a shutter sound is set. As a result, when the shutter sound is not set, the control unit 110 does not perform a control operation for reproducing the shutter sound and proceeds to step 415. However, when the shutter sound is set, the control unit 110 proceeds to step 413. In step 413, the control unit 110 controls the audio processing unit 125 to reproduce the shutter sound, and then proceeds to step 415. In step 415, the control unit 110 controls the camera 150 to photograph an image. When the shutter sound is set, the control unit 110 can control the camera 150 to take a photograph simultaneously with the output of the shutter sound.

In the example application of an embodiment of the present invention described below, a current state of preset photographing effects are assumed to exist. In these preset photographing effects, it is assumed that the operation setting mode is set as the sequence of the self-timer sound, the preparation sound, and the shutter sound through the user-defined mode as described above. Also, as an additional option, it is assumed that the flasher 151 is set to emit a flash every one second. In the method for emitting lights from the flasher 151, it is assumed that lights are set to emit flashes in a sequence of blue, red, yellow, purple, and white. In addition, with regard to the sound setting, it is assumed that a vocal sound is set as a self-timer sound, a timer is set as five seconds, a preparation sound is set as a vocal sound "cheese", and a shutter sound is set as a sound "click".

When the photographing key signal is input from the key input unit 127, the control unit 110 controls the audio processing unit 125 to reproduce a vocal sound "five" at a time five seconds before the moment of photographing, and simultaneously controls the flasher 151 to emit a blue light. Next, the control unit 110 controls the audio processing unit 125 to reproduce a vocal sound "four" at a time four seconds before the moment of photographing, and simultaneously controls the flasher 151 to emit a red light. Next, the control unit 110 controls the audio processing unit 125 to reproduce a vocal sound "three" at a time three seconds before the moment of photographing, and simultaneously controls the flasher 151 to emit a yellow light. Next, the control unit 110 controls the audio processing unit 125 to reproduce a vocal sound "two" at a time two seconds before the moment of photographing, and simultaneously controls the flasher 151 to emit a purple light. Next, the control unit 110 controls the audio processing unit 125 to reproduce a vocal sound "one" at a time one second before the moment of photographing, and simultaneously controls the flasher 151 to emit a white light. Next, the control unit 110 controls the audio processing unit 125 to reproduce a vocal sound "cheese" just before the moment of photographing. Next, the control unit 110 controls the audio processing unit 125 to reproduce a sound "click" at the moment of photographing. At this time, an image is photographed.

While the present invention has been shown and described with reference to certain preferred embodiments thereof, it will be understood by those skilled in the art that various changes in form and details may be made therein without departing from the spirit and scope of the invention as defined by the appended claims. For example, a mobile terminal having a camera generally includes a preview function, which enables a user to view an image before taking a photograph of the image. The image is displayed on a preview screen and the user may take a photograph of the image if a photograph of the displayed image is desired.

The embodiments of the present invention further provide the user with a method of setting the photographing effects, specifically, the user may set the photographing effects on the preview screen. That is, the user may set not only the self-timer sound, the preparation sound and the shutter sound, but also the operation of the flasher 151, the time setting, etc., while viewing the preview screen. After the user sets the photographing effects on the preview screen, the control unit 110 performs control operations according to preset photographing effects when receiving the photographing key signal from the key input unit 127. Accordingly, the embodiments of the present invention provide a photographing method having a camera as described above, which generates a visual effect or an auditory effect during the taking of a photograph to direct subjects being photographed to concentrate attention on the camera, so that a desired image can be obtained.

While the present invention has been shown and described with reference to certain embodiments, it would be appreciated by those skilled in the art that changes may be made in these embodiments without departing from the principles and spirit of the invention, the scope of which is defined in the claims and their equivalents.

## Claims

1. A photographing method for a mobile terminal having a camera, the photographing method comprising the steps of:
receiving a photographing key signal for photographing an image;
reproducing a self-timer sound to announce a time period leading up to a moment of photographing after receiving the photographing key signal;
reproducing a preparation sound to announce a time period just before the moment of photographing after the self-timer sound has been reproduced;
reproducing a shutter sound to announce the moment of photographing after the preparation sound has been reproduced; and
photographing an image simultaneously with the reproduction of the shutter sound.

2. A photographing method for a mobile terminal having a camera, the photographing method comprising the steps of:
receiving a photographing key signal for photographing an image;
reproducing a preparation sound to announce a time period just before a moment of photographing after receiving the photographing key signal;
reproducing a shutter sound to announce the moment of photographing after the preparation sound has been reproduced; and
photographing an image simultaneously with the reproduction of the shutter sound.

3. The photographing method as claimed in claim 2, wherein the step of reproducing the preparation sound comprises the steps of:
reproducing a self-timer sound to announce a time period leading up to the moment of photographing after receiving the photographing key signal; and
reproducing the preparation sound after the self-timer sound has been reproduced.

4. A photographing method for a mobile terminal which has a key input unit for generating a photographing key signal to photograph an image and a camera for photographing the image, the photographing method comprising the steps of:
setting at least one photographing effect for directing subjects being photographed to concentrate their attention on the camera; and
displaying the photographing effect set according to the setting step when receiving the photographing key signal.

5. The photographing method as claimed in claim 4, wherein the step of setting the photographing effect comprises the steps of:
setting at least one of a self-timer sound to announce a time leading up to a moment of photographing, a preparation sound to announce a time just before the moment of photographing and a shutter sound to announce the moment of photographing;
setting a sequence for outputting at least one of the self-timer sound, the preparation sound and the shutter sound;
setting an illumination of a flasher for directing subjects being photographed to concentrate their attention on the camera; and
setting the flasher to be illuminated simultaneously with the output of at least one of the self-timer sound, the preparation sound and the shutter sound.

6. The photographing method as claimed in claim 5, wherein the step of setting the illumination of the flasher comprises the step of:
selecting at least one of a plurality of colors such that the flasher is illuminated with one color substantially every second according to a period of time set in a timer.

7. The photographing method as claimed in claim 5, wherein, the step of setting the self-timer sound to announce a time leading up to a moment of photographing comprises the steps of:
selecting at least one preset time; and
setting a time for reproducing the self-timer sound.

8. The photographing method as claimed in claim 5, wherein the flasher is illuminated with different colors according to passage of time.

9. The photographing method as claimed in claim 5, wherein the self-timer sound is automatically set as a basic value when a value for the self-timer sound is not manually set.

10. The photographing method as claimed in claim 9, wherein the basic value of the self-timer sound is "five seconds".

11. The photographing method as claimed in claim 4, wherein the step of displaying the photographing effect comprises the steps of:
reproducing a preparation sound to announce a time period just before the moment of photographing after receiving the photographing key signal; and
reproducing a shutter sound to announce the moment of photographing after the preparation sound has been reproduced.

12. The photographing method as claimed in claim 11, wherein the step of reproducing the preparation sound comprises the step of:
reproducing a self-timer sound to announce a time period leading up to the moment of photographing before reproducing the preparation sound.
